# EUROPEAN PATENT SPECIFICATION

(11) **EP 3 974 093 B1**
(45) Date of publication and mention of the grant of the patent: **29.05.2024**
(21) Application number: 20810279.8
(22) Date of filing: 24.04.2020
(51) Int. Cl.: B23K 9/073, B23K 9/09, B23K 9/095, B23K 9/173

(54) **ARC WELDING METHOD AND ARC WELDING DEVICE**
LICHTBOGENSCHWEISSVERFAHREN UND LICHTBOGENSCHWEISSVORRICHTUNG
PROCÉDÉ ET DISPOSITIF DE SOUDAGE À L'ARC

(30) Priority: 22.05.2019 JP 2019096140
(43) Date of publication of application: 30.03.2022
(73) Proprietor: Panasonic Intellectual Property Management Co., Ltd., Osaka-shi, Osaka 540-6207 (JP)
(72) Inventor: SATOU Shun, Osaka-shi, Osaka 540-6207 (JP); MATSUOKA Noriyuki, Osaka-shi, Osaka 540-6207 (JP); KOWA Masaru, Osaka-shi, Osaka 540-6207 (JP); NAKAGAWA Akira, Osaka-shi, Osaka 540-6207 (JP); FUJIWARA Junji, Osaka-shi, Osaka 540-6207 (JP)
(74) Representative: Vigand, Philippe
(86) International application number: PCT/JP2020/017615
(87) International publication number: WO 2020/235293

(56) References cited:
- JP-A- S5 970 469
- JP-A- 2006 122 912
- JP-A- 2013 094 840
- JP-A- 2013 094 840
- US-A1- 2014 263 241

## Description

### TECHNICAL FIELD

The present invention relates to an arc welding method and an arc welding device.

### BACKGROUND ART

PTL 1 discloses a method for controlling an arc welding device that calculates a variation of welding voltage per predetermined time, and determines a constriction of a droplet based on the variation of welding voltage per predetermined time and a constriction determination threshold of a droplet.

Specifically, when a constriction (so-called neck) occurs between a welding wire and a melted portion of a base material, a sectional area decreases at the neck portion to cause a resistance value to increase. Thus, when the neck is generated, the variation of welding voltage increases even though current increase is maintained constant by short-circuit control. For this reason, when occurrence of the neck is detected based on the variation of voltage, a welding current is reduced immediately before opening of a short-circuit to reduce occurrence of spatters.

PTL 2 discloses an arc welding method where, when the constriction of droplet is detected, the welding current is reduced to a low-level current value. When the elapsed time from the constriction detection reaches a reference time before an arc is regenerated, the welding current is increased to a high-level current value. When the arc is regenerated, the welding current is changed to an initial arc current value. The initial arc current value is changed according to the value correlated with a heat input amount to a welding wire during a compensation period.

### Citation List

### Patent Literature

PTL 1: Japanese Patent No. 4760053
PTL2 : JP 2013 094840

### SUMMARY OF THE INVENTION

### Technical problem

Unfortunately, for example, when a welding wire having a small resistance, such as copper or aluminum, is used, even a constriction having occurred causes a small variation of welding voltage and a large variability. This may cause erroneous determination whether there is a constriction.

For example, when it is erroneously determined that there is no constriction even though the constriction has occurred, short-circuit welding is continued without reducing the welding current, and thus there is a problem that the amount of heat input at the time of opening the short-circuit increases and spatters are generated.

The present invention is made in view of such a point, and an object thereof is to reduce occurrence of spatters at the time of opening a short-circuit. Solution to problem

A first aspect of the present invention is directed to an arc welding method as defined in the appended claims and including alternately a short-circuit period provided with a short-circuit state where a welding wire and a base material are short-circuited, and an arc period provided with an arc state where an arc is generated between the welding wire and the base material. The arc welding method includes the steps of: a) calculating an integrated power value by integrating power supplied to the welding wire within a predetermined period after the welding wire is short-circuited; and b) reducing a welding current to be supplied to the welding wire when the integrated power value is larger than a predetermined threshold.

In the first aspect of the present invention, an integrated power value within the predetermined period is calculated after the welding wire is short-circuited. When the integrated power value is larger than a predetermined threshold, the welding current is reduced.

As described above, the amount of heat input to the welding wire is reduced by reducing the welding current before opening of the short-circuit based on the integrated amount of power supplied to the welding wire. This enables reducing occurrence of spatters at the time of opening the short-circuit.

The welding current is reduced before opening of the short-circuit without detecting occurrence of a constriction, so that a defect caused by erroneous determination whether there is a constriction can be avoided.

A second aspect of the present invention in the first aspect thereof is configured such that in the step a), calculation of the integrated power value is started after a predetermined time elapses after the welding wire has been short-circuited.

In the second aspect of the present invention, the calculation of the integrated power value is started when the short-circuit is stabilized, for example, after elapse of a predetermined time after the welding wire has been short-circuited. This enables calculating an integrated value of power excluding a period in which the short-circuit is not stable.

A third aspect of the present invention in the first or second aspect thereof is configured such that in the step a), the calculation of the integrated power value is started after the welding current starts to increase after the welding wire has been short-circuited.

In the third aspect of the present invention, the calculation of the integrated power value is started after the welding current starts to increase after the welding wire has been short-circuited. This enables an appropriate amount of heat to be applied to the welding wire even when a welding voltage changes.

A fourth aspect of the present invention in any one of the first to third further includes the step of reversely feeding the welding wire after the welding current starts to increase after the welding wire has been short-circuited, or after a predetermined time elapses after the welding wire has been short-circuited.

In the fourth aspect of the present invention, the welding wire is reversely fed after the welding current starts to increase after the welding wire has been short-circuited, or after a predetermined time elapses after the welding wire has been short-circuited. This enables buckling of the welding wire to be reduced.

A fifth aspect of the present invention in claim 1 may further include the step of determining whether the integrated power value is larger than a predetermined threshold. The predetermined threshold may be a fixed value. The fixed value may be determined for each welding condition.

A sixth aspect of the present invention is directed to an arc welding device as defined in the appended claims and that performs welding including alternately repeating a short-circuit period provided with a short-circuit state where a welding wire and a base material are short-circuited, and an arc period provided with an arc state where an arc is generated between the welding wire and the base material. The welding device includes: a calculation unit that calculates an integrated power value by integrating power supplied to the welding wire within a predetermined period after the welding wire is short-circuited; and a controller that reduces a welding current to be supplied to the welding wire when the integrated power value is larger than a predetermined threshold.

In the sixth aspect of the present invention, the calculation unit calculates the integrated power value within the predetermined period, after the welding wire is short-circuited. The controller reduces the welding current when the integrated power value is larger than a predetermined threshold.

As described above, the amount of heat input to the welding wire is reduced by reducing the welding current before opening of the short-circuit based on the integrated amount of power supplied to the welding wire. This enables reducing occurrence of spatters at the time of opening the short-circuit.

A seventh aspect of the present invention includes a plurality of the arc welding devices according to the sixth aspect thereof, and a cable on a ground side in each of the plurality of the arc welding devices is connected to the base material.

In the seventh aspect of the present invention, the cable on the ground side in each of the plurality of the arc welding devices is connected to the base material. The plurality of the arc welding devices is configured such that the welding current at the time of opening the short-circuit is reduced based on an integrated value of power supplied to the welding wire, i.e., the amount of heat input actually applied to the welding wire.

Thus, even when influence of noise generated in one arc welding device reaches another arc welding device through the base material, or even when a constriction cannot be accurately determined because a voltage cannot be accurately detected due to a small voltage change caused by a welding wire made of a material having a low resistance value containing aluminum or copper, control for reducing the welding current before opening of the short-circuit between the welding wire and the base material can be reliably performed based on the integrated power value.

An eighth aspect of the present invention in the sixth aspect thereof includes the controller that may further determine whether the integrated power value is larger than a predetermined threshold. The predetermined threshold may be a fixed value. The fixed value may be determined for each welding condition.

### Advantageous effect of invention

The present invention enables reducing occurrence of spatters at the time of opening a short circuit.

### BRIEF DESCRIPTION OF DRAWINGS

FIG. 1 is a block diagram illustrating a schematic configuration of an arc welding device according to the present exemplary embodiment.
FIG. 2 is a diagram illustrating output waveforms of a welding voltage, a welding current, and an integrated power value during arc welding.
FIG. 3 is a diagram illustrating output waveforms of an integrated current value and an integrated power value.
FIG. 4 is a block diagram illustrating a schematic configuration of an arc welding device according to the present modification.

### DESCRIPTION OF EMBODIMENT

Exemplary embodiments of the present invention will be described below with reference to the drawings. The following description of preferable exemplary embodiments is merely illustrative in nature and is not intended to limit the present invention, its application, or its use.

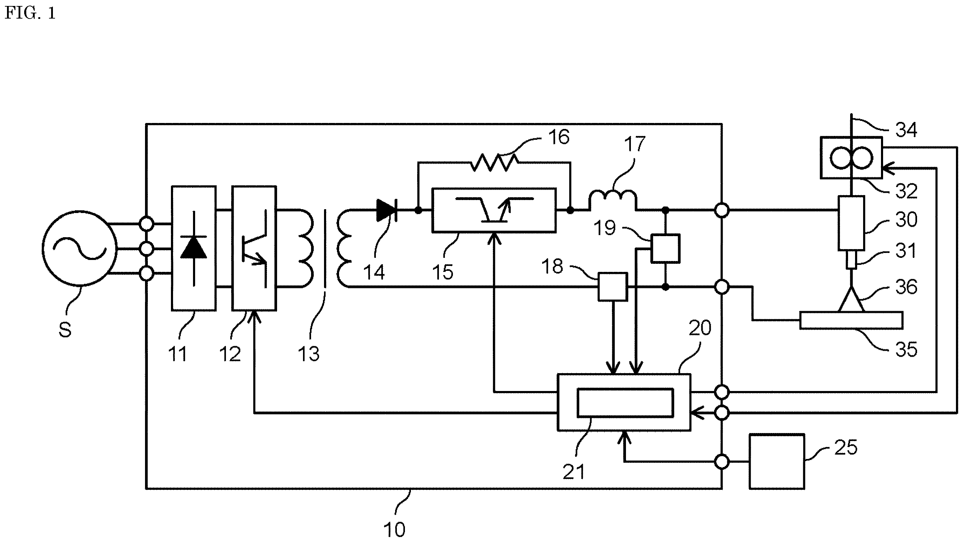

As illustrated in FIG. 1, arc welding device 10 performs welding alternately and repeatedly including a short-circuit period provided with a short-circuit state where welding wire 34 serving as a consumable electrode and base material 35 serving as an object to be welded are short-circuited, and an arc period provided with an arc state where an arc is generated between welding wire 34 and base material 35.

Arc welding device 10 includes first rectifier 11, first switching unit 12, transformer 13, second rectifier 14, second switching unit 15, resistor 16, reactor 17, welding current detector 18, welding voltage detector 19, and controller 20.

First rectifier 11 rectifies an input voltage input from input power source S outside arc welding device 10. First switching unit 12 adjusts output of first rectifier 11 by switching operation. Transformer 13 converts output of first switching unit 12 into output suitable for welding.

Second rectifier 14 rectifies output of transformer 13. Second switching unit 15 adjusts output of second rectifier 14 by switching operation. Resistor 16 is connected in parallel with second switching unit 15.

Reactor 17 is connected in series with second switching unit 15. Reactor 17 smooths output of second switching unit 15.

Welding current detector 18 detects a welding current supplied through welding wire 34 and base material 35. A detection signal indicating the welding current detected by welding current detector 18 is transmitted to controller 20.

Welding voltage detector 19 detects a welding voltage supplied across welding wire 34 and base material 35. A detection signal indicating the welding voltage detected by welding voltage detector 19 is transmitted to controller 20.

Welding torch 30, base material 35, wire feeder 32, and setting unit 25 are connected to arc welding device 10 to constitute an arc welding system.

Welding torch 30 is provided with welding tip 31 for supplying power to welding wire 34. In response to a signal from controller 20, wire feeder 32 performs feeding control for feeding welding wire 34, such as constant feeding control at a predetermined feeding speed, or feeding control for alternately performing forward feeding for feeding welding wire 34 in a direction to base material 35 and reverse feeding for feeding welding wire 34 in a direction opposite to the direction of the forward feeding.

When the forward feeding and the reverse feeding are controlled, the welding is performed by alternately generating the short-circuit state and the arc state while alternately repeating the forward feeding and the reverse feeding as feeding of welding wire 34. This causes the forward feeding and the reverse feeding to be periodically performed so that the short-circuit state and the arc state are mechanically generated alternately.

Switching between the forward feeding and the reverse feeding may be performed in accordance with a state of a welding phenomenon without performing periodical switching between the forward feeding and the reverse feeding. Specifically, as the feeding of welding wire 34, the reverse feeding is performed when welding wire 34 and base material 35 are short-circuited to cause the short-circuit state, and the forward feeding is performed when the short-circuit is opened to cause the arc state.

Setting unit 25 is used for setting welding conditions in arc welding device 10.

Welding output of arc welding device 10 is supplied to welding wire 34 through welding tip 31. The welding output of arc welding device 10 then causes arc 36 to be generated between welding wire 34 and base material 35 to perform welding.

Controller 20 transmits signals between respective units of arc welding device 10 and devices outside arc welding device 10. In the example illustrated in FIG. 1, the respective units of arc welding device 10 are first switching unit 12, second switching unit 15, welding current detector 18, and welding voltage detector 19. The devices outside arc welding device 10 are wire feeder 32 and setting unit 25.

Controller 20 outputs control signals to first switching unit 12 and second switching unit 15 to control the welding output. Controller 20 outputs a control signal to wire feeder 32 to control wire feeding speed.

Controller 20 includes a processor and a memory that is electrically connected to the processor and stores programs and information for operating the processor. Controller 20 includes calculation unit 21.

Calculation unit 21 calculates an integrated power value by integrating power supplied to welding wire 34 within the predetermined period, after welding wire 34 is short-circuited. The power supplied to the welding wire is calculated based on the product of the welding current and the welding voltage.

Controller 20 compares the welding voltage detected by welding voltage detector 19 with a threshold voltage that is preset. When the welding voltage is equal to or lower than the threshold voltage, controller 20 determines the short-circuit state. In contrast, when the welding voltage exceeds the threshold voltage, controller 20 determines the arc state.

Hereinafter, control of the welding current, being performed by controller 20, will be described.

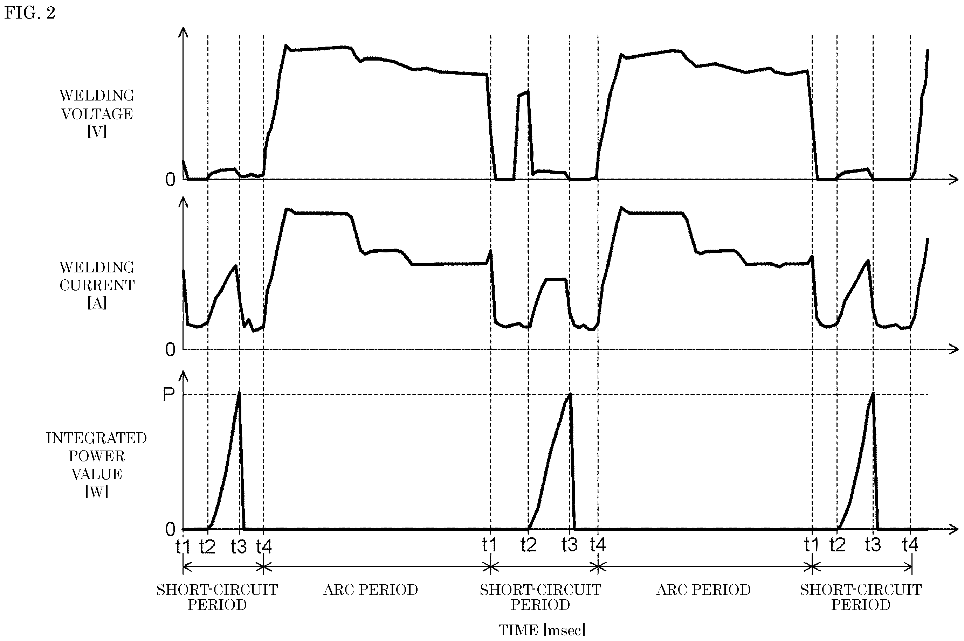

As illustrated in FIG. 2, when determining the short-circuit state at time t1, controller 20 reduces the welding current to an initial current by adjusting the output of first switching unit 12. At this time, second switching unit 15 is continuously maintained in a conductive state.

Then, controller 20 adjusts the output of first switching unit 12 to increase the welding current at a predetermined rate of current increase from time t2 to time t3. At this time, operation of wire feeder 32 is controlled to reversely feed welding wire 34. Alternatively, welding wire 34 may be reversely fed with elapse of a predetermined time after being short-circuited (after the short-circuit is stabilized). When the welding wire is reversely fed during the short-circuit period, opening of the short-circuit between welding wire 34 and base material 35 can be promoted. In particular, when the feeding control for the forward feeding and the reverse feeding of welding wire 34 is performed by periodic switching between the forward feeding and the reverse feeding, a droplet is formed more stably on a tip end side of welding wire 34, and stability of droplet transfer from welding wire 34 to base material 35 is improved.

The feeding control for the forward feeding and the reverse feeding of welding wire 34 may not be performed. For example, control for constant feeding at a predetermined feeding speed without reversely feeding welding wire 34 may be performed.

Calculation unit 21 calculates the integrated power value by integrating power from time t2 to time t4. Specifically, the calculation of the integrated power value is started after the welding current starts to increase after welding wire 34 has been short-circuited. For example, when an increase in the welding current is detected, calculation unit 21 starts to calculate the integrated power value upon the detection. Instead of this, for example, when elapse of time during which the welding current is expected to increase is detected, calculation unit 21 starts to calculate the integrated power value upon the detection.

The calculation of the integrated power value may be started after a predetermined time elapses after welding wire 34 has been short-circuited, for example, after the short-circuit is stabilized. For example, the calculation of the integrated power value may be started between time t1 and time t2. When the elapse of the predetermined time is detected, calculation unit 21 may start the calculation of the integrated power value upon the detection.

Controller 20 determines whether the integrated power value is larger than threshold P predetermined. In the example illustrated in FIG. 2, the integrated power value is larger than threshold P at time t3. When the integrated power value is larger than predetermined threshold P, controller 20 reduces the welding current to be supplied to welding wire 34 by switching a state of second switching unit 15 from the conductive state to an interrupted state.

At time t4, the opening of the short-circuit between welding wire 34 and base material 35 is detected. Controller 20 adjusts the output of first switching unit 12 such that the welding current becomes a predetermined current. At this time, second switching unit 15 is continuously maintained in a conductive state. Then, at time t4, the short circuit is opened and the state shifts to the arc state.

Here, integration of the integrated power value is terminated after the integrated power value is reset at a time point at which the integrated power value exceeds threshold P during the short-circuit period. When the integrated power value does not exceed threshold P, the integration is terminated after the integrated power value is reset in arc determination for determining the arc state.

As described above, arc welding device 10 according to the present exemplary embodiment is configured such that the amount of heat input to welding wire 34 is reduced by reducing the welding current before opening of the short-circuit based on the integrated amount of power supplied to welding wire 34. This enables reducing occurrence of spatters at the time of opening the short-circuit.

### <Comparison between integrated current value and integrated power value>

Hereinafter, it is studied whether similar control can be performed even when an integrated current value obtained by integrating the welding current is used instead of the integrated power value.

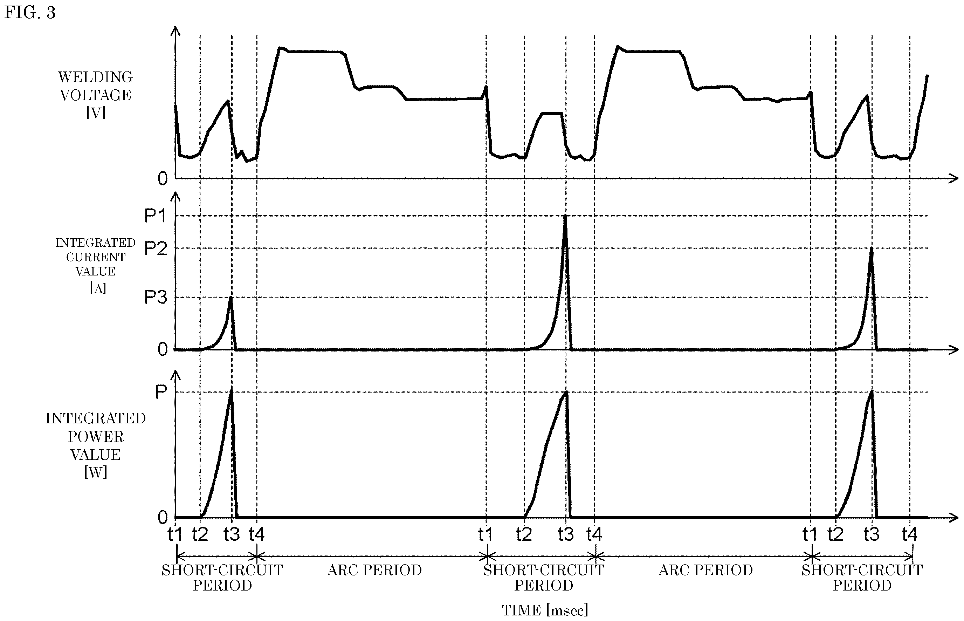

As illustrated in FIG. 3, the integrated current value indicates three peak values P1, P2, and P3. For example, when P1 being the largest integrated current value is defined as a threshold, integrated current values being P2 and P3 are below threshold P1. Thus, controller 20 does not reduce the welding current to be supplied to welding wire 34 at the time when the integrated current value becomes P2 or P3.

However, when the peak value of the integrated power value is seen at the time when the integrated current value becomes P2 or P3, the integrated power value is larger than threshold P. Thus, when short-circuit welding is continued without reducing the welding current at the time with the integrated current value being P2 or P3, the amount of heat input at the time of opening the short-circuit increases to generate spatters.

In contrast, when P3 being the smallest integrated current value is defined as a threshold, controller 20 reduces the welding current at timing when the amount of heat input is unnecessary to be reduced before the time at which the integrated current value becomes P1 or P2, thereby varying the amount of heat input.

The above studied results reveal that determining timing of reducing the welding current to be supplied to welding wire 34 based on the integrated power value enables the welding current to be effectively reduced at timing of reducing the amount of heat input as compared with determining the timing of reducing the welding current based on the integrated current value, thereby causing the amount of heat input during the short-circuit period to be more stable and bringing an advantage in reducing occurrence of spatters at the time of opening the short-circuit.

### <<Modification>>

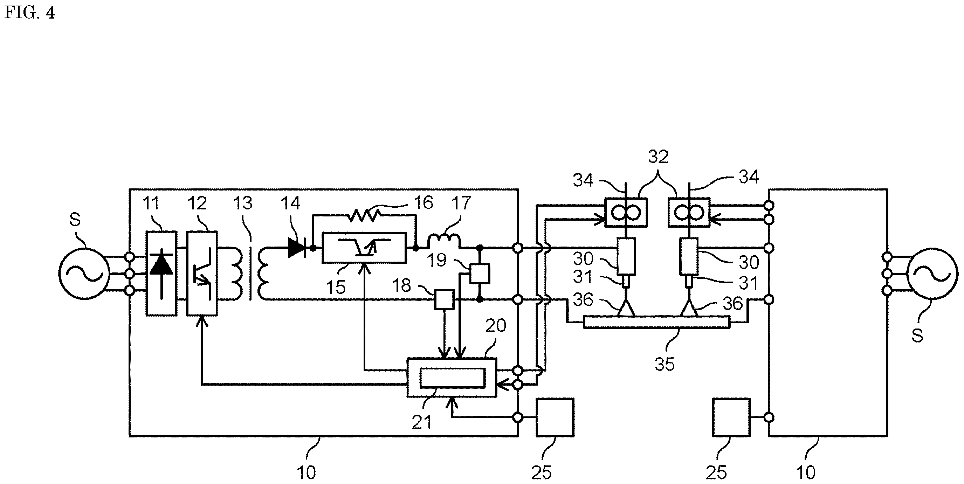

As illustrated in FIG. 4, a plurality of arc welding devices 10 is provided (two in the example illustrated in FIG. 4). Two arc welding devices 10 each include a ground-side cable connected to one base material 35. Specifically, welding is performed by the plurality of arc welding devices 10 on common base material 35 electrically connected or base material 35 on a common jig (not illustrated). This causes two arc welding devices 10 to simultaneously generate arc 36.

Arc welding device 10 of the present exemplary embodiment is configured such that the welding current at the time of opening the short circuit is reduced based on the integrated value of power supplied to welding wire 34, i.e., the amount of heat input actually applied to welding wire 34.

Thus, even when influence of noise generated in one arc welding device 10, as another welding, reaches another arc welding device 10 through base material 35, or even when a constriction cannot be accurately determined because a voltage cannot be accurately detected due to a small voltage change caused by welding wire 34 made of a material having a low resistance value containing aluminum or copper, control for reducing the welding current before opening of the short-circuit between welding wire 34 and base material 35 can be reliably performed based on the integrated power value.

### INDUSTRIAL APPLICABILITY

As described above, the present invention is extremely useful and has high industrial applicability because it can obtain a highly practical effect of enabling occurrence of spatters at the time of opening a short-circuit to be reduced.

### REFERENCE MARKS IN THE DRAWINGS

- 10: arc welding device
- 20: controller
- 21: calculation unit
- 32: wire feeder
- 34: welding wire
- 35: base material

## Claims

1. An arc welding method including alternately repeating a short-circuit period provided with a short-circuit state where a welding wire (34) and a base material (35) are short-circuited, and an arc period provided with an arc state where an arc is generated between the welding wire (34) and the base material (35), the arc welding method being **characterized by** the following steps:
a) calculating an integrated power value by integrating power supplied to the welding wire (34) within a predetermined period in which a welding current increases at a predetermined rate of current increase after the welding wire (34) is short-circuited;
b) reducing a welding current to be supplied to the welding wire (34) when the integrated power value is larger than a predetermined threshold (P) in the short-circuit period; and
c) terminating integration of the integrated power value after the integrated power value is reset in arc determination for determining the arc state when the integrated power value does not exceed the predetermined threshold (P).

2. The arc welding method according to claim 1, wherein in the step a), calculation of the integrated power value is started after a predetermined time elapses after the welding wire (34) has been short-circuited.

3. The arc welding method according to claim 1 or 2, wherein in the step a), the calculation of the integrated power value is started after the welding current starts to increase after the welding wire (34) has been short-circuited.

4. The arc welding method according to any one of claims 1 to 3, further comprising the step of reversely feeding the welding wire (34) after the welding current starts to increase after the welding wire has been short-circuited, or after a predetermined time elapses after the welding wire (34) has been short-circuited.

5. The arc welding method according to claim 1, further comprising the step of determining whether the integrated power value is larger than a predetermined threshold (P),
wherein the predetermined threshold (P) is a fixed value.

6. An arc welding device (10) that performs welding including alternately repeating a short-circuit period provided with a short-circuit state where a welding wire (34) and a base material (35) are short-circuited, and an arc period provided with an arc state where an arc is generated between the welding wire (34) and the base material (35), the arc welding device (10) is **characterized by** comprising:
a calculation unit (21) that calculates an integrated power value by integrating power supplied to the welding wire (34) within a predetermined period in which a welding current increases at a predetermined rate of current increase after the welding wire (34) is short-circuited; and
a controller (20) that reduces a welding current to be supplied to the welding wire (34) when the integrated power value is larger than a predetermined threshold (P) in the short-circuit period and terminates integration of the integrated power value after the integrated power value is reset in arc determination for determining the arc state when the integrated power value does not exceed the predetermined threshold (P).

7. The arc welding device (10) according to claim 6 comprising a plurality of the arc welding devices (10),
wherein cables on a ground side in the plurality of the arc welding devices (10) are each connected to the base material (35).

8. The arc welding device (10) according to claim 6, wherein
the controller (20) further determines whether the integrated power value is larger than the predetermined threshold (P), and
the predetermined threshold (P) is a fixed value.

## Patentansprüche

1. Lichtbogenschweißverfahren, das das abwechselnde Wiederholen einer Kurzschlussperiode, die mit einem Kurzschlusszustand versehen ist, in dem ein Schweißdraht (34) und ein Basismaterial (35) kurzgeschlossen werden, und einer Lichtbogenperiode, die mit einem Lichtbogenzustand versehen ist, in dem zwischen dem Schweißdraht (34) und dem Basismaterial (35) ein Lichtbogen erzeugt wird, beinhaltet, wobei das Lichtbogenschweißverfahren durch die folgenden Schritte gekennzeichnet ist:
a) Berechnen eines integrierten Leistungswertes durch Integrieren einer Leistung, die dem Schweißdraht (34) in einer vorbestimmten Periode zugeführt wird, in der ein Schweißstrom mit einer vorbestimmten Rate der Stromerhöhung erhöht wird, nachdem der Schweißdraht (34) kurzgeschlossen wurde;
b) Reduzieren eines Schweißstroms, der dem Schweißdraht (34) zuzuführen ist, wenn der integrierte Leistungswert in der Kurzschlussperiode größer ist als ein vorbestimmter Schwellwert (P); und
c) Beenden der Integration des integrierten Leistungswertes, nachdem der integrierte Leistungswert zum Bestimmen des Lichtbogenzustands in eine Lichtbogenbestimmung zurückgesetzt wurde, wenn der integrierte Leistungswert den vorbestimmten Schwellwert (P) nicht überschreitet.

2. Lichtbogenschweißverfahren nach Anspruch 1, wobei in Schritt a) eine Berechnung des integrierten Leistungswertes gestartet wird, nachdem eine vorbestimmte Zeit vergangen ist, nachdem der Schweißdraht (34) kurzgeschlossen wurde.

3. Lichtbogenschweißverfahren nach Anspruch 1 oder 2, wobei in Schritt a) die Berechnung des integrierten Leistungswertes gestartet wird, nachdem eine Erhöhung des Schweißstroms gestartet wurde, nachdem der Schweißdraht (34) kurzgeschlossen wurde.

4. Lichtbogenschweißverfahren nach einem der Ansprüche 1 bis 3, das ferner den Schritt des umgekehrten Zuführens des Schweißdrahtes (34) umfasst, nachdem eine Erhöhung des Schweißstroms gestartet wurde, nachdem der Schweißdraht kurzgeschlossen wurde, oder nachdem eine vorbestimmte Zeit vergangen ist, nachdem der Schweißdraht (34) kurzgeschlossen wurde.

5. Lichtbogenschweißverfahren nach Anspruch 1, das ferner den Schritt des Bestimmens, ob der integrierte Leistungswert größer ist als ein vorbestimmter Schwellwert (P), umfasst,
wobei der vorbestimmte Schwellwert (P) ein fester Wert ist.

6. Lichtbogenschweißvorrichtung (10), die ein Schweißen durchführt, das das abwechselnde Wiederholen einer Kurzschlussperiode, die mit einem Kurzschlusszustand versehen ist, in dem ein Schweißdraht (34) und ein Basismaterial (35) kurzgeschlossen werden, und einer Lichtbogenperiode, die mit einem Lichtbogenzustand versehen ist, in dem zwischen dem Schweißdraht (34) und dem Basismaterial (35) ein Lichtbogen erzeugt wird, beinhaltet, wobei die Lichtbogenschweißvorrichtung (10) durch Umfassen von Folgendem gekennzeichnet ist:
eine Berechnungseinheit (21), die durch Integrieren einer Leistung, die dem Schweißdraht (34) in einer vorbestimmten Periode zugeführt wird, in der ein Schweißstrom mit einer vorbestimmten Rate der Stromerhöhung erhöht wird, nachdem der Schweißdraht (34) kurzgeschlossen wurde, einen integrierten Leistungswert berechnet, und
eine Steuerung (20), die einen dem Schweißdraht (34) zuzuführenden Schweißstrom reduziert, wenn der integrierte Leistungswert in der Kurzschlussperiode größer ist als ein vorbestimmter Schwellwert (P), und eine Integration des integrierten Leistungswertes beendet, nachdem der integrierte Leistungswert zum Bestimmen des Lichtbogenzustands in eine Lichtbogenbestimmung zurückgesetzt wurde, wenn der integrierte Leistungswert den vorbestimmten Schwellwert (P) nicht überschreitet.

7. Lichtbogenschweißvorrichtung (10) nach Anspruch 6, die eine Vielzahl der Lichtbogenschweißvorrichtungen (10) umfasst,
wobei Kabel auf einer Bodenseite in der Vielzahl von Lichtbogenschweißvorrichtungen (10) jeweils mit dem Basismaterial (35) verbunden sind.

8. Lichtbogenschweißvorrichtung (10) nach Anspruch 6, wobei
die Steuerung (20) ferner bestimmt, ob der integrierte Leistungswert größer ist als der vorbestimmte Schwellwert (P), und
der vorbestimmte Schwellwert (P) ein fester Wert ist.

## Revendications

1. Procédé de soudage à l'arc comportant la répétition alternée d'une période de court-circuit avec un état de court-circuit où un fil de soudage (34) et un matériau de base (35) sont court-circuités, et d'une période d'arc avec un état d'arc où un arc est généré entre le fil de soudage (34) et le matériau de base (35), le procédé de soudage à l'arc étant **caractérisé par** les étapes suivantes :
a) calculer une valeur de puissance intégrée en intégrant une puissance fournie au fil de soudage (34) pendant une période prédéterminée au cours de laquelle un courant de soudage augmente à un taux prédéterminé d'augmentation de courant après que le fil de soudage (34) a été court-circuité ;
b) réduire un courant de soudage à fournir au fil de soudage (34) lorsque la valeur de puissance intégrée est supérieure à un seuil prédéterminé (P) pendant la période de court-circuit ; et
c) mettre fin à l'intégration de la valeur de puissance intégrée après la réinitialisation de la valeur de puissance intégrée lors de la détermination d'arc pour déterminer l'état d'arc lorsque la valeur de puissance intégrée ne dépasse pas le seuil prédéterminé (P).

2. Procédé de soudage à l'arc selon la revendication 1, dans lequel à l'étape a), le calcul de la valeur de puissance intégrée commence après l'écoulement d'un temps prédéterminé après que le fil de soudage (34) a été court-circuité.

3. Procédé de soudage à l'arc selon la revendication 1 ou 2, dans lequel à l'étape a), le calcul de la valeur de puissance intégrée commence après que le courant de soudage a commencé à augmenter après que le fil de soudage (34) a été court-circuité.

4. Procédé de soudage à l'arc selon l'une des revendications 1 à 3, comprenant en outre l'étape d'alimentation inverse du fil de soudage (34) après que le courant de soudage a commencé à augmenter après que le fil de soudage a été court-circuité, ou après l'écoulement d'un temps prédéterminé après que le fil de soudage (34) a été court-circuité.

5. Procédé de soudage à l'arc selon la revendication 1, comprenant en outre l'étape déterminant si la valeur de puissance intégrée est supérieure à un seuil prédéterminé (P),
dans lequel le seuil prédéterminé (P) est une valeur fixe.

6. Dispositif de soudage à l'arc (10) qui réalise le soudage comportant la répétition alternée d'une période de court-circuit avec un état de court-circuit où un fil de soudage (34) et un matériau de base (35) sont court-circuités, et d'une période d'arc avec un état d'arc où un arc est généré entre le fil de soudage (34) et le matériau de base (35), le dispositif de soudage à l'arc (10) étant **caractérisé en ce qu'**il comprend :
une unité de calcul (21) qui calcule une valeur de puissance intégrée en intégrant une puissance fournie au fil de soudage (34) pendant une période prédéterminée au cours de laquelle un courant de soudage augmente à un taux prédéterminé d'augmentation de courant après que le fil de soudage (34) a été court-circuité ; et
un dispositif de commande (20) qui réduit un courant de soudage à fournir au fil de soudage (34) lorsque la valeur de puissance intégrée est supérieure à un seuil prédéterminé (P) pendant la période de court-circuit, et qui met fin à l'intégration de la valeur de puissance intégrée après la réinitialisation de la valeur de puissance intégrée lors de la détermination d'arc pour déterminer l'état d'arc lorsque la valeur de puissance intégrée ne dépasse pas le seuil prédéterminé (P).

7. Dispositif de soudage à l'arc (10) selon la revendication 6, comprenant une pluralité de dispositifs de soudage à l'arc (10),
dans lequel des câbles sur un côté terre dans la pluralité de dispositifs de soudage à l'arc (10) sont connectés chacun au matériau de base (35).

8. Dispositif de soudage à l'arc (10) selon la revendication 6, dans lequel
le dispositif de commande (20) détermine en outre si la valeur de puissance intégrée est supérieure au seuil prédéterminé (P), et
le seuil prédéterminé (P) est une valeur fixe.
